# EUROPÄISCHE PATENTANMELDUNG

(11) **EP 2 119 593 A1**
(43) Veröffentlichungstag der Anmeldung: **18.11.2009**
(21) Anmeldenummer: 08156152.4
(22) Anmeldetag: 14.05.2008
(51) Int. Cl.: B60Q 1/14

(54) **Steuergerät zum Steuern und/oder Regeln einer vertikalen Hell-Dunkel-Grenze von Hauptscheinwerfern eines Kraftfahrzeugs**

(71) Anmelder: Hella KGaA Hueck & Co., 59552 Lippstadt (DE)
(72) Erfinder: Schwarz, Sergej, 59557 Lippstadt (DE); Schmidt, Christian, 33106 Paderborn (DE); Pollert, Markus, 61476 Kronberg (DE); Woltermann, Bernd, 70736 Fellbach (DE)
(74) Vertreter: Downar, Michael

(57) **Zusammenfassung**

Die Erfindung betrifft ein Steuergerät zum Steuern und/oder Regeln einer vertikalen Hell-Dunkel-Grenze von Hauptscheinwerfern eines Kraftfahrzeugs (1) umfassend wenigstens einen rechten und wenigstens einen linken Kraftfahrzeugscheinwerfer für Fernlicht mit einer Lichtverteilung oder mehreren einstellbaren Lichtverteilungen.
Das Steuergerät der eingangs genannten Art weist eine Schnittstelle zur Verbindung mit einer ersten Erkennungsvorrichtung zum Erkennen von vorrausfahrenden und/oder entgegenkommenden Fahrzeugen (2) auf. Außerdem ist es mit einer Schnittstelle zur Verbindung mit den Kraftfahrzeugscheinwerfern ausgestattet. Das Steuergerät zum Steuern und/oder Regeln ist geeignet und eingerichtet aufgrund eines Signals der ersten Erkennungsvorrichtung, das ein vorrausfahrendes und/oder entgegenkommendes Fahrzeug (2) anzeigt, ein Stellsignal zu erzeugen. Mit dem Stellsignal wird zur Vermeidung einer Blendung wenigstens einer der Kraftfahrzeugscheinwerfer für Fernlicht ausgeschaltet oder die Hell-Dunkel-Grenze verschoben.
Das Steuergerät weist eine Schnittstelle zur Verbindung mit einer zweiten Erkennungsvorrichtung zum Erkennen eines Radius (r) einer vom Kraftfahrzeug zu durchfahrenden oder durchfahrenen Kurve auf. Ferner ist die Vorrichtung geeignet und eingerichtet in Abhängigkeit von einem Signal der zweiten Erkennungsvorrichtung, das den Radius (r) der Kurve signalisiert, ein Stellsignal zu erzeugen, um zur Vermeidung einer Blendung die rechten und linken Kraftfahrzeugscheinwerfer für Fernlicht auszuschalten.

## Beschreibung

Die Erfindung betrifft ein Steuergerät zum Steuern und/oder Regeln einer vertikalen Hell-Dunkel-Grenze von Hauptscheinwerfern eines Kraftfahrzeugs vorzugsweise mit adaptiver horizontaler Hell-Dunkel-Grenze oder mit Fernlichtassistent umfassend wenigstens einen rechten und wenigstens einen linken Kraftfahrzeugscheinwerfer für Fernlicht mit einer Lichtverteilung oder mehreren einstellbaren Lichtverteilungen.

Das Steuergerät der eingangs genannten Art weist eine Schnittstelle zur Verbindung mit einer ersten Erkennungsvorrichtung zum Erkennen von vorrausfahrenden und/oder entgegenkommenden Fahrzeugen auf. Außerdem ist es mit einer Schnittstelle zur Verbindung mit den Kraftfahrzeugscheinwerfern ausgestattet. Das Steuergerät zum Steuern und/oder Regeln ist geeignet und eingerichtet aufgrund eines Signals der ersten Erkennungsvorrichtung, das ein vorrausfahrendes und/oder entgegenkommendes Fahrzeug anzeigt, ein Stellsignal zu erzeugen. Mit dem Stellsignal wird zur Vermeidung einer Blendung wenigstens einer der Kraftfahrzeugscheinwerfer für Fernlicht ausgeschaltet oder die Hell-Dunkel-Grenze verschoben.

Steuergeräte werden in großer Vielzahl zur Steuerung und Regelung von Kraftfahrzeugscheinwerfern benutzt. Die bekannten Steuergeräte sind im einfachsten Fall zum manuellen Ein- oder Ausschalten des Fernlichts geeignet. Vielfach können die Steuergeräte jedoch auch Teil eines Fahrassistenzsystems sein, mit dem beispielsweise das Fernlicht automatisch ein- oder ausgeschaltet wird, die horizontale Hell-Dunkel-Grenze des Abblendlichts oder des Fernlichts verschoben werden kann oder die vertikale Hell-Dunkel-Grenze des Fernlichts verschoben werden kann. Diese Maßnahmen dienen einerseits dazu, dem Fahrzeugführer eine möglichst weite Sicht auf die vor ihm liegende Straße zu bieten. Andererseits dienen sie dazu, einen entgegenkommenden oder vorausfahrenden Fahrzeugführer nicht zu blenden. Das manuelle Ein- oder Ausschalten des Fernlichts wird durch die Fahrassistenzsysteme übernommen. Auch das automatische Kurvenlicht ist ein solches Fahrassistenzsystem, mit welchem die Blendung des entgegenkommenden Fahrzeugs vermieden und dem Fahrzeugführer eine bessere Beleuchtung der vor ihm liegenden Straße geboten wird.

Um erkennen zu können, ob dem Fahrzeug ein anderes Fahrzeug vorausfährt oder entgegenkommt, weisen die Fahrassistenzsysteme Erkennungsmittel wie Kameras auf, welche die Situation vor dem Fahrzeug erfassen. Über Bilderkennung und Bildverarbeitung ist es möglich, mit den Erkennungsmitteln festzustellen, ob dem Fahrzeug ein Kraftfahrzeug vorausfährt oder ein Kraftfahrzeug entgegenkommt. Ist dies der Fall, kann in Abhängigkeit von weiteren Parametern das Fernlicht abgeblendet werden, die vertikale Hell-Dunkel-Grenze verschoben werden oder die horizontale Hell-Dunkel-Grenze verschoben werden.

Die Praxis hat gezeigt, dass es mitunter trotz der Verwendung der Fahrassistenzsysteme zur Steuerung der Beleuchtung des Kraftfahrzeugs zu Situationen kommen kann, in denen der Gegenverkehr oder der vorausfahrende Verkehr geblendet wird.

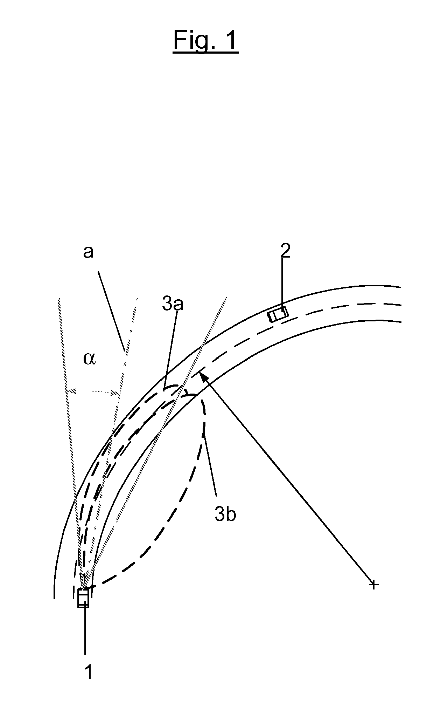

In der
- Fig. 1: ist eine Situation schematisch dargestellt, in der es zur Blendung des vorausfahrenden oder entgegenkommenden Fahrzeugs kommen kann.
- Fig. 1 a: zeigt die Verteilung des Lichts des linken Hauptscheinwerfers mit vertikaler Hell-Dunkel-Grenze und
- Fig. 1 b: zeigt die Verteilung des Lichts des rechten Hauptscheinwerfers mit vertikaler Hell-Dunkel-Grenze.

In der Figur 1 ist in schematischer Draufsicht die Situation einer Kurvenfahrt durch eine Rechtskurve dargestellt. Das Kraftfahrzeug 1 weist ein Fahrassistenzsystem auf, mit dem das Blenden eines entgegenkommenden Fahrzeugs 2 verhindert werden soll. Das Fahrassistenzsystem umfasst eine Kamera, die eine optische Achse a hat, und die einen Erfassungsbereich hat, dessen rechter Rand im Winkel α von der optischen Achse a abweicht. Das Kraftfahrzeug 1 hat ferner Kurvenlichtscheinwerfer, die aufgrund der Kurvenfahrt durch die dargestellte Rechtskurve nach rechts eingeschwenkt sind. Die Verteilung des Fernlichts ist mit den Bezugszeichen 3a, 3b gekennzeichnet und zwar mit 3a die Verteilung des linken Hauptscheinwerfers und mit 3b die Verteilung des rechten Hauptscheinwerfers. In der dargestellten Situation tritt das entgegenkommende Fahrzeug zuerst in den Erfassungsbereich der Kamera ein, dann in den Lichtkegel des Fernlichts der Hauptscheinwerfer. Das Fahrassistenzsystem sorgt dafür, dass nach dem Erkennen des entgegenkommenden Fahrzeugs 2, die Hauptscheinwerfer ein Licht mit einer Lichtverteilung erzeugen, das den Gegenverkehr nicht blendet, oder aber die vertikale Hell-Dunkel-Grenze verschoben wird, damit der Gegenverkehr nicht geblendet wird.

Die Fig. 1 zeigt die Situation in einer Kurve, deren Radius einen Betrag hat, der größer als ein vorbestimmter Wert ist. Bei kleineren Radien, d. h. bei engeren Kurven können dagegen wegen des weiteren Schwenkens der Kurvenlichtscheinwerfer Blendungen des Gegenverkehrs auftreten. In diesen Fällen tritt das entgegenkommende Fahrzeug 2 erst in den Lichtkegel 3a, 3b der Hauptscheinwerfer ein und gelangt erst darauf hin in den Erfassungsbereich der Kamera.

Es ergibt sich also die Situation, dass das entgegenkommende Fahrzeug 2 bereits in den Lichtkegel 3a, 3b des Fernlichts eingetreten ist. Die Lichtverteilung der Fernlichtscheinwerfer ist so, dass der Fahrzeugführer des entgegenkommenden Fahrzeugs 2 geblendet wird. Das Fahrassistenzsystem mit der Kamera hat dagegen das entgegenkommende Kraftfahrzeug 2 noch nicht erfasst. Es kann dieses Kraftfahrzeug 2 nicht erfassen, da es sich außerhalb des Erfassungsbereichs der Kamera des Fahrassistenzsystems befindet.

In dieser Situation kann das Fahrassistenzsystem den Kraftfahrzeugführer nicht wirksam unterstützen, um ein Blenden des Fahrzeugführers des entgegenkommenden Fahrzeugs zu verhindern. Es ist dann nach wie vor ein Eingriff des Kraftfahrzeugsführers notwendig, um die Scheinwerfer abzublenden und eine Blendung des Fahrzeugführers des entgegenkommenden Fahrzeugs zu verhindern.

Hier setzt die vorliegende Erfindung an.

Der vorliegenden Erfindung liegt die Aufgabe zugrunde, ein bekanntes Steuergerät so weiter zu entwickeln, dass ein Blenden des Fahrzeugführers eines entgegenkommenden Fahrzeugs oder eines vorrausfahrenden Fahrzeugs auch dann vermieden wird, wenn aufgrund einer Kurvenfahrt entgegenkommenden oder vorausfahrende Fahrzeug nicht mehr im Erfassungsbereich des Erkennungsmittels des Fahrassistenzsystems ist.

Diese Aufgabe wird erfindungsgemäß dadurch gelöst, dass das Steuergerät eine Schnittstelle zur Verbindung mit einer zweiten Erkennungsvorrichtung zum Erkennen eines Radius einer vom Kraftfahrzeug zu durchfahrenden oder durchfahrenen Kurve aufweist. Ferner ist die Vorrichtung geeignet und eingerichtet in Abhängigkeit von einem Signal der zweiten Erkennungsvorrichtung, das den Radius der Kurve anzeigt, ein Stellsignal zu erzeugen, um zur Vermeidung einer Blendung die rechten und linken Kraftfahrzeugscheinwerfer für Fernlicht auszuschalten oder durch die Änderung der Lichtverteilung die Hell-Dunkel-Grenze zu verschieben.

Gemäß der Erfindung wird somit erreicht, dass Fahrzeuge, die sich zwar im Lichtkegel eines der beiden Fernlichtscheinwerfers befinden können, jedoch nicht von dem ersten Erkennungsmittel erfasst werden, nicht geblendet werden können, da die Fernlichtscheinwerfer in einem solchen Fall abgeschaltet sind. Dazu ist es notwendig, dass das Steuergerät den Radius der Kurve kennt, die gerade durchfahren wird oder die in naher Zukunft durchfahren wird. Dieses wird dem Steuergerät von dem zweiten Erkennungsmittel mitgeteilt.

Vorteilhaft ist das Steuergerät geeignet und eingerichtet in Abhängigkeit vom Betrag des Kurvenradius, den das Signal der zweiten Erkennungsvorrichtung anzeigt, dass Stellsignal zum Ausschalten des Scheinwerfers oder der Scheinwerfer für das Fernlicht zu erzeugen. Solange der Betrag oberhalb eines vorgebaren Schwellwerts liegt, wird die Einstellung der Hauptscheinwerfer nicht geändert. Erst bei engeren Kurven, d. h. bei einem kleineren Betrag wird das Stellsignal erzeugt.

Das Steuergerät kann auch geeignet und eingerichtet sein, dass Stellsignal zum Ausschalten des Scheinwerfers oder der Scheinwerfer für Fernlicht in Abhängigkeit von Parametern des Erfassungsbereichs des ersten Erkennungsmittels, zum Beispiel eines Kamera-Öffnungswinkels zu erzeugen. Es ist somit möglich, dass nicht nur der Kurvenradius und insbesondere den Betrag des Kurvenradius in den Steuer- oder Regelalgorithmus, der von dem Steuergerät abgearbeitet wird, einfließt, sondern auch ein Parameter, der den Erfassungsbereich und die Grenze des Erfassungsbereichs kennzeichnet.

Die Parameter des Erfassungsbereichs können entweder als Berechnungsparameter in das Steuergerät eingegeben, dort gespeichert und bei der Erzeugung der Stellgröße verarbeitet werden. Ebenso ist denkbar, dass, falls sich die Parameter während des Betriebs des Kraftfahrzeugs ändern können und über eine Schnittstelle ständig in das Steuergerät eingelesen wird.

Gemäß der Erfindung können über die Parameter des Erfassungsbereichs hinaus ein- oder mehrere Parameter einer oder mehrerer Lichtverteilungen des Scheinwerfers oder der Scheinwerfer für das Fernlicht in dem Steuergerät eingegeben, gespeichert werden und bei der Erzeugung der Stellgröße verarbeitet werden. Die Parameter können bei der Programmierung des Steuergeräts eingegeben werden. Ebenso ist denkbar, dass eine Schnittstelle vorgesehen ist, über welche im Betrieb des Steuergeräts die Parameter zur Lichtverteilung eingelesen werden.

Das Steuergerät kann Teil einer Anordnung sein, die aus dem Steuergerät selbst, der ersten Erkennungsvorrichtung, der zweiten Erkennungsvorrichtung und Scheinwerfern für Fernlicht gebildet wird. Die erste Erkennungsvorrichtung kann eine Kamera umfassen, deren Öffnungswinkel als Berechnungsparameter in dem Steuergerät eingegeben, gespeichert ist. Auch die zweite Erkennungsvorrichtung kann eine Kamera umfassen, mittels derer der Radius einer bevorstehenden Kurvenfahrt ermittelbar ist. Aus der Erkennungsvorrichtung und die zweite Erkennungsvorrichtung können zu einer einzigen Erkennungsvorrichtung zusammengefasst sein.

Gemäß der Erfindung ist es ferner möglich, dass die zweite Erkennungsvorrichtung einen Lenkwinkelsensor zur Ermittlung des Lenkradeinschlages, einen Gierratensensor zur Ermittlung der Querbeschleunigung und/oder einen Radwinkelsensor zur Feststellung des Vorderradeinschlags aufweisen, und dass aus diesen und gegebenenfalls weiteren Größen der Radius der Kurvenfahrt festgestellt wird.

Ebenso ist es möglich, dass die zweite Erkennungsvorrichtung ein Navigationssystem umfasst, welches satellitengestützt die Radien der auf dem Streckenverlauf liegenden Kurven ermittelt.

Das Steuergerät und der bzw. die Scheinwerfer einer erfindungsgemäßen Anordnung können zum Einstellen einer horizontalen Hell-Dunkel-Grenze des bzw. der Scheinwerfer für Fernlicht geeignet und eingerichtet sein. Ebenso kann das Steuergerät zum automatischen Ein- und Ausschalten des Fernlichtscheinwerfers bzw. der Fernlichtscheinwerfer geeignet und eingerichtet sein. Bei einer besonderen Anordnung kann die Lichtverteilung der Scheinwerfer für das Fernlicht sogar durch das Steuergerät eingestellt werden.

Das Steuergerät und der bzw. die Scheinwerfer können für Kurvenlicht geeignet und eingerichtet sein.

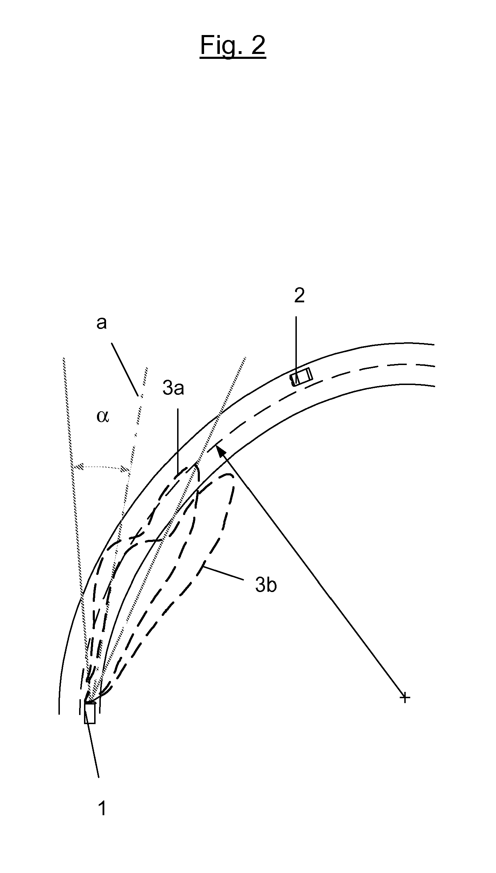

Die Erfindung wird anhand der Figuren 2 bis 2b näher erläutert. Es zeigt
- Fig. 2: schematisch eine Situation, in der die Hauptscheinwerfer abgeblendet sind,
- Fig. 2a: die Verteilung des Lichts des linken Hauptscheinwerfers mit Abblendlicht in der Situation nach Fig. 2 und
- Fig. 2b: die Verteilung des Lichts des rechten Hauptscheinwerfers mit Abblendlicht in der Situation nach Fig. 2.

Die in Fig. 2 dargestellte Situation zeigt, wie durch das Abblenden der Hauptscheinwerfer zu einer Entblendung des entgegenkommenden Fahrzeugs kommt. Das entgegenkommende Fahrzeug tritt erst in den Erfassungsbereich des ersten Erkennungsmittels ein und bevor es in den Lichtkegels des Fernlichts der Hauptscheinwerfer des Kraftfahrzeugs 1 einträte. Das Fahrassistenzsystem des Kraftfahrzeugs 1 hat daher die Möglichkeit auf den Eintritt des entgegenkommenden Fahrzeugs zu reagieren, ohne dass zu einer Blendung kommt.

### Bezugszeichenliste

- 1: Kraftfahrzeug
- 2: entgegenkommendes Fahrzeug
- 3a: Lichtverteilung des linken Hauptscheinwerfers
- 3b: Lichtverteilung des rechten Hauptscheinwerfers
- r: Kurvenradius
- a: optische Achse der Kamera
- α: halber Öffnungswinkel der Kamera

## Patentansprüche

1. Steuergerät zum Steuern und/oder Regeln einer vertikalen Hell-Dunkel-Grenze von Hauptscheinwerfern eines Kraftfahrzeugs vorzugsweise mit adaptiver horizontaler Hell-Dunkel-Grenze oder mit Fernlichtassistent umfassend wenigstens einen rechten und wenigstens einen linken Kraftfahrzeugscheinwerfer für Fernlicht mit einer Lichtverteilung oder mehreren einstellbaren Lichtverteilungen
- mit einer Schnittstelle zur Verbindung mit einer ersten Erkennungsvorrichtung zum Erkennen von vorrausfahrenden und/oder entgegenkommenden Fahrzeugen und
- mit einer Schnittstelle zur Verbindung mit den Kraftfahrzeugscheinwerfern,
- wobei das Steuergerät geeignet und eingerichtet ist aufgrund eines Signals der ersten Erkennungsvorrichtung, das ein vorrausfahrendes und/oder entgegenkommendes Fahrzeug signalisiert, ein Stellsignal zu erzeugen, um zur Vermeidung einer Blendung wenigstens einen der Kraftfahrzeugscheinwerfer für Fernlicht auszuschalten oder die Hell-Dunkel-Grenze zu verschieben,
**dadurch gekennzeichnet, dass**
- das Steuergerät eine Schnittstelle zur Verbindung mit einer zweiten Erkennungsvorrichtung zum Erkennen eines Radius einer vom Kraftfahrzeug zu durchfahrenden oder durchfahrenen Kurve aufweist und
- ferner geeignet und eingerichtet ist in Abhängigkeit von einem Signal der zweiten Erkennungsvorrichtung, das den Radius der Kurve signalisiert, ein Stellsignal zu erzeugen, um zur Vermeidung einer Blendung die rechten und linken Kraftfahrzeugscheinwerfer für Fernlicht auszuschalten oder durch die Änderung der Lichtverteilung die Hell-Dunkel-Grenze zu verschieben.

2. Steuergerät nach Anspruch1, **dadurch gekennzeichnet, dass** das Steuergerät geeignet und eingerichtet ist in Abhängigkeit vom Betrag des Kurvenradius, den das Signal der zweiten Erkennungsvorrichtung anzeigt, das Stellsignal zu erzeugen.

3. Steuergerät nach Anspruch 1 oder 2, **dadurch gekennzeichnet, dass** das Steuergerät geeignet und eingerichtet das Stellsignal auch in Abhängigkeit von Parametern eines Erfassungsbereichs des ersten Erkennungsmittels zu erzeugen.

4. Steuergerät nach Anspruch 3, **dadurch gekennzeichnet, dass** die Parameter des Erfassungsbereichs als Berechnungsparameter in dem Steuergerät eingebbar, speicherbar und bei der Erzeugung der Stellgröße verarbeitbar ist.

5. Steuergerät nach einem der Ansprüche 1 bis 4, **dadurch gekennzeichnet, dass** ein oder mehrere Parameter einer oder mehrerer Lichtverteilungen des Scheinwerfers oder der Scheinwerfer für Fernlicht in dem Steuergerät eingebbar, speicherbar und bei der Erzeugung der Stellgröße verarbeitbar sind.

6. Anordnung umfassend ein Steuergerät nach einem der Ansprüche 1 bis 5, einer ersten Erkennungsvorrichtung, einer zweiten Erkennungsvorrichtung, wenigstens einem Scheinwerfer für Fernlicht.

7. Anordnung nach Anspruch 6, **dadurch gekennzeichnet, dass** die erste Erkennungsvorrichtung eine Kamera umfasst, deren Öffnungswinkel als Berechnungsparameter in dem Steuergerät eingegeben und gespeichert ist.

8. Anordnung nach Anspruch 6 oder 7, **dadurch gekennzeichnet, dass** die zweite Erkennungsvorrichtung eine Kamera umfasst, mittels derer der Radius einer bevorstehenden Kurvenfahrt ermittelbar ist.

9. Anordnung nach einem der Ansprüche 6 bis 8, **dadurch gekennzeichnet, dass** die zweite Erkennungsvorrichtung ein Lenkwinkelsensor, einen Gierratensensor und/oder einen Radwinkelsensor zur Ermittlung des Radius einer Kurvenfahrt aufweist oder dass die zweite Erkennungsvorrichtung Teil eines Lane-Departure-Warning-Systems ist.

10. Anordnung nach einem der Ansprüche 6 bis 8, **dadurch gekennzeichnet, dass** die zweite Erkennungsvorrichtung ein satellitengestütztes Navigationssystem umfasst, welches die Radien der auf dem aktuellen Streckenverlauf liegenden Kurven liefert.

11. Anordnung nach einem der Ansprüche 6 bis 10, **dadurch gekennzeichnet, dass** das Steuergerät und der bzw. die Scheinwerfer zum Einstellen einer horizontalen Hell-Dunkel-Grenze des bzw. der Scheinwerfer für Fernlicht geeignet und eingerichtet ist.

12. Anordnung nach einem der Ansprüche 6 bis 11, **dadurch gekennzeichnet, dass** das Steuergerät zum automatischen Ein- und Ausschalten der Fernlichtscheinwerfer geeignet und eingerichtet ist.

13. Anordnung nach einem der Ansprüche 6 bis 12, **dadurch gekennzeichnet, dass** die Lichtverteilung der Scheinwerfer für das Fernlicht mittels des Steuergeräts einstellbar ist.

14. Anordnung nach einem der Ansprüche 6 bis 13, **dadurch gekennzeichnet, dass** das Steuergerät und der bzw. die Scheinwerfer für Kurvenlicht geeignet und eingerichtet sind.
